# EUROPEAN PATENT APPLICATION

(11) **EP 2 741 469 A1**
(43) Date of publication of application: **11.06.2014**
(21) Application number: 12195955.5
(22) Date of filing: 06.12.2012
(51) Int. Cl.: H04L 29/08, H04W 48/02

(54) **Method and device for controlling use of applications by a communication equipment of a user having accepted a contract of use**

(71) Applicant: Alcatel Lucent, 75007 Paris (FR)
(72) Inventor: Marquet, Bertrand, 91620 NOZAY (FR); Rebierre, Nicolas, 91620 NOZAY (FR); Turkiewicz, Pierre, 91620 NOZAY (FR)
(74) Representative: Camus, Olivier Jean-Claude

(57) **Abstract**

A device (D), intended for controlling the use of applications by a first communication equipment (E1) belonging to a first user having accepted a contract of use proposed by a second user having a second communication equipment (E2), comprises:
- a first control means (CM1) running into the first communication equipment (E1) and arranged, when the latter (E1) triggers the use of an application, for determining a level of respect of the contract by this triggered use, and for delivering notifications to be displayed and representative of this determined level of respect for the first (E1) and second (E2) communication equipments, and
- a second control means (CM2) running into the second communication equipment (E2) and arranged, when the latter (E2) has received a notification, for triggering its display on its screen.

## Description

### Technical field

The present invention relates to communication equipments and more precisely to the control of the use of applications by such communication equipments.

One means here by "communication equipment" any type of electronic equipment comprising a communication module capable of establishing connexion with at least one wired or wireless communication network to exchange data with other communication equipments, notably under control of applications running in it. So, it may be a smartphone, a tablet, a laptop or a personal computer, for instance.

Moreover, one means here by "use of application" not only the usage that is made by a user of an application running in his communication equipment, but also the loading or downloading of an application into a communication equipment for installation purpose.

### Background of the invention

More and more people want to be connected everywhere and anytime by means of communication equipments, which creates new usages but also some societal challenges, notably regarding children. Indeed, letting children alone with a permanent connection to the Internet brought an increasing risk of exposure to inappropriate contents. So, there is a need for a certain level of control of the use of applications by children.

To control children usages at least two important aspects must be taken into account.

A first aspect concerns the content, i.e. the accessed information. Indeed, an inappropriate or violent or sexually explicit content can deeply affect children or even young adults, and the society and parents have to protect them against such contents by means of content filters.

A second aspect concerns the application use by itself. Indeed, the time spent with connected communication equipments, the time of use of connected communication equipments, and the place where connected communication equipments are used should be reasonably controlled. This appears also to be a parent responsibility to define reasonable limits of use under explanations. But this is a hard task for parents to make sure that their children remain within the reasonable limits they have defined.

The best control functions are provided by set top boxes (or STBs) provided by network operators. For instance, mobile network operators offer different functions for controlling privacy and application use, filtering contents, and localizing and monitoring settings.

Control functions allow parents to turn off features, such as downloading videos or images, texting, and accessing the Internet. Most of these control functions allow also parents to limit the number of calls or text messages and set time restrictions.

Content filtering functions, such as in firewall or antivirus, can block certain websites to allow for safer browsing on the Internet. Some of them can also limit access to videos and other multimedia sources.

Localizing and monitoring setting functions allow parents to track their children using GPS applications that are running into their mobile communication equipments.

There are also mobile applications, such as NQ family Guardian®, that also propose, in addition, an electronic paper contract comprising items that can be discussed and negotiated between parents and children before being signed. But these applications are not able to inform the parents and the children when the contract is respected or not.

### Summary of the invention

So, objectives of the invention is to provide controlling users with means for controlling applications installations and usages on controlled users' communication equipments, to provide controlled users with means to assess where their usage stands with regards to limits defined by controlling users, and to favour discussions on limits between controlled and controlling users while preserving the privacy of controlled users.

To this effect the invention notably provides a method, intended for controlling the use of applications by a first communication equipment belonging to a first user (referred to as a "controlled user") having accepted a contract of use proposed by a second user (referred to as a "controlling user") having a second communication equipment, and comprising a step during which, each time the first communication equipment triggers the use of an application, in an offline or connected mode, one determines a level of respect of the contract associated to the triggered use from a comparison of this triggered use with the use defined by the contract according to at least one criteria, and one provides the first and second communication equipments with notifications to be displayed and representative of this determined level of respect.

So, a second (controlling) user (for instance a parent) does not have to monitor and analyze logs of the first (controlled) user (for instance a child), and can be notified of the main reason(s) why the contract is not respected by the controlled user whenever a contract limit is reached. Thus, privacy of the controlled user is preserved by the fact that he is informed of what actions are no respectful of the contract when he attempts to perform them, and is also informed that a notification will be sent to the controlling user.

The method according to the invention may include additional characteristics considered separately or combined, and notably:
- each criteria may be chosen from a group comprising at least a type of the application used, a location where the application is used, a time of use of the application, a duration of the use of the application, and a frequency of use of the application;
   ➢ the type of the application may be determined from its identifier and/or from accessible information relative to it and/or to contents it provides access to;
- a first level of respect may correspond to a use fully respecting the contract, a second level of respect may correspond to a use that is near to do not respect the contract, and a third level of respect may correspond to a use that does not respect the contract;
   ➢ the notification may be intended for triggering the display of an icon either in a green colour when it represents the first level of respect, or in an orange colour when it represents the second level of respect, or else in a red colour when it represents the third level of respect ("as a traffic light");
- a message, explaining reason(s) of a notification representative of a level of respect corresponding to a use that either is near to do not respect the contract or does not respect the contract, can be displayed on a screen of the second communication equipment on request of its second user and/or on a screen of the first communication equipment on request of its first user;
- the application use may be forbidden in the case where it corresponds to a level of respect corresponding to a use that does not respect the contract;
   ➢ one may authorize the forbidden use in case of reception of a use authorization emanating from the second communication equipment.

The invention also provides a device, intended for controlling the use of applications by a first communication equipment belonging to a first (or controlled) user having accepted a contract of use proposed by a second (or controlling) user having a second communication equipment, and comprising:
- a first control means intended for running into the first communication equipment and arranged, each time the first communication equipment triggers the use of an application, in an offline or connected mode, for determining a level of respect of the contract by the triggered use from a comparison of this triggered use with the use defined by the contract according to at least one criteria, and for delivering notifications to be displayed and representative of this determined level of respect for the first and second communication equipments, and
- a second control means intended for running into the second communication equipment and arranged, when the latter has received the notification, for triggering its display on a screen of the second communication equipment.

The device according to the invention may include additional characteristics considered separately or combined, and notably:
- its second control means may be arranged for determining reason(s) of a notification, representative of a level of respect corresponding to a use that either is near to do not respect the contract or does not respect the contract, on request of the second user, and then for triggering the display of a message explaining the determined reason(s) on a screen of the second communication equipment,
- its first control means may be arranged for determining reason(s) of a notification, representative of a level of respect corresponding to a use that either is near to do not respect the contract or does not respect the contract, on request of the first user, and then for triggering the display of a message explaining the determined reason(s) on a screen of the first communication equipment,
- a notification delivery mean running on an intermediary equipment (such as a connected server) may be arranged for determining reason(s) of a notification, representative of a level of respect corresponding to a use on the first communication equipment that either is near to do not respect the contract or does not respect the contract, and then for triggering the display of a message explaining the determined reason(s) on the screens of the first and second communication equipments;
- each criteria may be chosen from a group comprising at least a type of the application used, a location where the application is used, a time of use of the application, a duration of the use of the application, and a frequency of use of the application;
   ➢ its first control means may be arranged for determining the type of the application from its identifier and/or from accessible information relative to it and/or to contents it provides access to;
- its first control means may be arranged for forbidden the application use when it corresponds to a level of respect corresponding to a use that does not respect the contract;
   ➢ its first control means may be arranged for authorizing the forbidden use when the first communication equipment has received a use authorization from the second communication equipment.

The invention also provides a communication equipment comprising either a first control means or a second control means of a device such as the one above introduced.

### Brief description of the figures

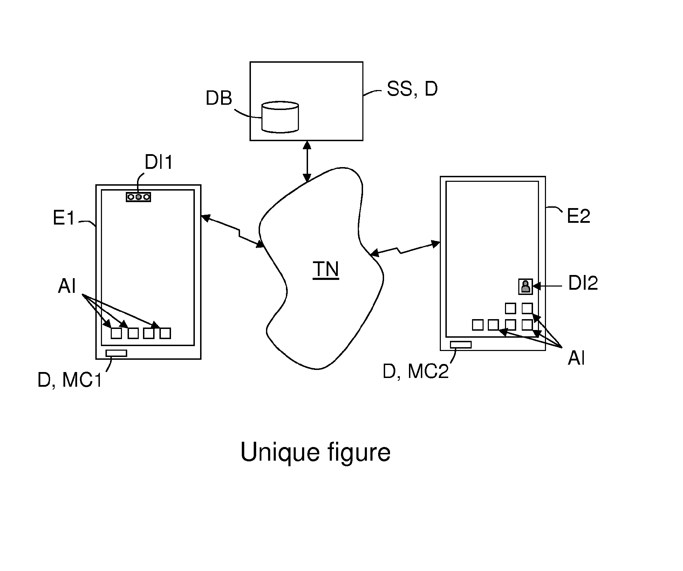

Other features and advantages of the invention will become apparent on examining the detailed specifications hereafter and the appended drawing, wherein the unique figure schematically and functionally illustrates two communication equipments and a service server connected to a transport network and comprising parts of a control device according to the invention.

### Detailed description of the preferred embodiment

The appended drawing may serve not only to complete the invention, but also to contribute to its understanding, if need be.

The invention aims, notably, at offering a method, and an associated device D, intended for controlling the use of applications by a first communication equipment E1 belonging to a first user, when the latter has negotiated and accepted a contract of use with a second user having a second communication equipment E2.

In the following description it will be considered that the user communication equipments Ei (i = 1 or 2) are smartphones. But each user communication equipment could be of another type, as soon as it comprises a communication module capable of establishing connexion with at least one wired or wireless communication network to exchange data with other communication equipments, notably under control of applications running in it. So, it may be also a tablet, a laptop or a personal computer, for instance.

Moreover in the following description it will be considered that the first user is a child and the second user is a parent of this child. But this is not mandatory.

As illustrated in the unique figure, each user communication equipment Ei is connected to a transport network TN, that can be a combination of wired and wireless networks (or infrastructures) allowing access to the Internet (for instance), and comprises one or more applications that are running in it and can be respectively selected by a finger interaction with associated icons Al displayed on their respective touchscreens.

The method according to the invention comprises a step during which, each time the first communication equipment E1 triggers the use of an application in a preferred connected mode (i.e. when this application interacts with the transport network) or in an offline mode, one determines a level of respect of the contract (an more precisely of an electronic (or digital) version of this contract) by the triggered use, from a comparison of this triggered use with the use that is defined by the contract according to at least one criteria (or indicator). Then one provides the first E1 and second E2 communication equipments with notifications to be displayed and representative of this determined level of respect.

Here, the expression "use of application" does not only refer to the usage that is made by a first user of an application running in his first communication equipment E1, but refers also to the loading or downloading of an application into a first communication equipment E1 for installation purpose.

This offers to a parent (or second user) a way to know on a continuous basis if the (family) contract is respected while preserving the child (or first user) privacy if this contract is effectively respected.

Such a method can be implemented by a device D according to the invention that comprises at least first CM1 and second CM2 control means running respectively into the first E1 and second E2 communication equipments.

The first control means CM1 can be seen as an application stored into the first communication equipment E1 and arranged for acting each time the latter (E1) uses an application in a connected mode or in an offline mode. When such a situation occurs, it determines a level of respect of the contract by the application use from a comparison of this use with the use defined by the contract according to at least one criteria (or indicator), and for delivering notifications to be displayed and representative of this determined level of respect for the first E1 and second E2 communication equipments.

The second control means CM2 can be seen as an application stored into the second communication equipment E2 and arranged for acting each time the latter (E2) receives a notification emanating from the first communication equipment E1 and more precisely from its first control means CM1. When such a situation occurs, it triggers the display of the received notification on the (touch)screen of its second communication equipment E2. Of course, this requires the second communication equipment E2 to be also in a connected mode.

It is important to note that the first CM1 and second CM2 control means can be made of software modules (or a computer program product). But they may be also made of a combination of software modules and electronic circuit(s) or hardware modules.

Preferably, each notification is intended for triggering the display on a screen of a dedicated icon DI1 or DI2 that is representative of the determined level of respect. This is notably the case in the non-limiting example illustrated in the unique figure, where the first notification dedicated to the first communication equipment E1 concerns an icon representing three circles associated respectively to three different colours (for instance red, orange and green) and located inside a rectangle, while the second notification dedicated to the second communication equipment E2 concerns an icon representing a part of a person than can take three different colours (for instance red, orange and green) and located inside a square.

But in a variant the notification could be a textual message to be displayed on the corresponding (touch)screen. A non-limiting example of notification is given hereafter. It corresponds to a parent alert of third (or red) level) in the case of tentative of an unauthorized application installation.
Type of problem: "Installation"
Application identifier: "WARTUBE"
Context: "Home"
Action required : "Authorize or Block"
Recommendation : "Block and call to discuss".

Each criteria (or indicator) that is used by the first control means CM1 can be chosen from a group comprising at least the type of the application used, the location where the application is used, the time of use of the application, the duration of the use of the application, and the frequency of use of the application. One or more criteria can be used. This depends from the contract between the first and second users.

The type of the application can be determined from its identifier (possibly its name), and/or from accessible information relative to it and/or to contents it provides access to or delivers. The accessible information relative to a used application can be found everywhere, and notably in webpages or internet sites or in a database DB that can be part, for example, of a service server SS that may belong to the device D (as illustrated in the unique figure) and is accessible to the first control means CM1 via its first communication equipment E1 and the transport network TN. The service server SS may be, for instance, one of the network equipments of a (mobile) network operator. The database DB can store hints, such as application metadata coming from application publishers (application category on the application shop, and/or PEGI rating), or inferred information obtained by analyzing the applications and notably their descriptions and/or comments posted by their users. The database DB may be automatically enriched after each control carried out by a first control means CM1.

The location where the application is used can be the school, a mall, a public transportation, a flat or house, or a sport area, for instance. The location control requires the first communication equipment E1 to be equipped with a localization system (for instance of the GPS type). For instance, the contract can stipulate that the first user is not allowed to use chosen application(s) when he is at school and/or that he is only authorized to use chosen application(s) when he is in a public transportation.

The duration of the application use can be cumulative or not.

For instance, each used criteria corresponds to at least one selected authorized value or threshold. In this case the first control means CM1 compares information or data relative to the application use with the selected authorized value(s) and/or threshold(s).

In an embodiment, the first control means CM1 can be arranged for determining the level of respect between a first one corresponding to an application use that fully respects the contract (and therefore means that there is no particular risk for the child), a second one corresponding to an application use that is near to do not respect the contract (and therefore means that there is a potential moderate risk for the child - this can be determined by means of thresholds intended for alerting when an application use is tolerated but should not last), and a third one corresponding to a use that does not respect the contract (and therefore means that there is a potential high risk for the child).

In this embodiment, the first control means CM1 may deliver a notification that is intended for triggering a display on a screen of an icon DI1 or DI2 that is either in a green colour when it represents the first level of respect, or in an orange colour when it represents the second level of respect, or else in a red colour when it represents the third level of respect. For instance and as mentioned above, in the non-limiting example illustrated in the unique figure, when the first control means CM1 determines i) a first level of respect, it delivers a first notification that triggers colouring in green colour of the right circle of icon DI1 and a second notification that triggers colouring in green colour of the person of icon DI2, ii) a second level of respect, it delivers a first notification that triggers colouring in orange colour of the central circle of icon DI1 and a second notification that triggers colouring in orange colour of the person of icon DI2, and iii) a third level of respect, it delivers a first notification that triggers colouring in red colour of the left circle of icon DI1 and a second notification that triggers colouring in red colour of the person of icon DI2.

As illustrated in the non-limiting illustrated example the icon DI1 may be displayed in the status bar of the first communication equipment E1, for instance.

Preferably, when the contract is near to do not be respected or is not respected, the second user may have the ability to know why, and consequently to take actions regarding the first user and the contract. To this effect, the second control means CM2 can be arranged for determining reason(s) of a notification representative of a level of respect corresponding to a use that either is near to do not respect the contract (second level) or does not respect contract delivering a message (third level), on request of the second user, and then for providing the second communication equipment E2 with a message explaining the determined reason(s) and to be displayed on the (touch)screen of this second communication equipment E2. One possibility is that such a determination can be carried out by the second control means CM2 alone or in combination with the first control means CM1. For instance, when the second user touches the icon DI2 when it is orange or red, this triggers the display of the corresponding message.

Also preferably, when the contract is near not to be respected or is not respected, the first user may have the ability to know why. To this effect, the first control means CM1 can be arranged for determining main reason(s) of a notification representative of a level of respect corresponding to a use that either is near to do not respect the contract (second level) or does not respect contract delivering a message (third level), on request of the first user, and then for providing the first communication equipment E1 with a message explaining the determined reason(s) and to be displayed on the (touch)screen of this first communication equipment E1. For instance, when the first user touches the icon DI1 when it is orange or red, this triggers the display of the corresponding message.

In a variant or in addition, the device D may comprise a notification delivery mean running on an intermediary equipment (for instance a connected server (possibly SS)). This notification delivery mean may be arranged for determining reason(s) of a notification, representative of a level of respect corresponding to a use on the first communication equipment E1 that either is near to do not respect the contract or does not respect the contract, and then for triggering the display of a message explaining the determined reason(s) on the screens of the first E1 and second E2 communication equipments.

Also preferably, the first control means CM1 can be arranged for forbidden the triggered application use only when it corresponds to a level of respect corresponding to a use that does not respect the contract (third (or red) level).

In this case, the first control means CM1 can be arranged for finally authorizing the triggered application use that was forbidden when its first communication equipment E1 has received a use authorization emanating from the second communication equipment E2 (and more precisely from its second control means CM2). Such a use authorization can be triggered by the second control means CM2 when the second user indicates that he authorizes the triggered application use (forbidden) with his second communication equipment E2, after having analysed the message explaining the reason(s) of the received notification and/or after having discussed with the first user. For instance, when the second user touches the icon DI2 when it is red, this triggers the display of the corresponding message and of an authorization or block option.

This invention offers several advantages, and notably:
- it preserves privacy of the first user as long as he fully respects the contract,
- it increases the level of trust of a second user regarding the first user activities.

The invention is not limited to the embodiments of control method, control device and communication equipment described above, only as examples, but it encompasses all alternative embodiments which may be considered by one skilled in the art within the scope of the claims hereafter.

## Claims

1. Method for controlling the use of applications by a first communication equipment (E1) belonging to a first user having accepted a contract of use proposed by a second user having a second communication equipment (E2), said method comprising a step during which, each time said first communication equipment (E1) triggers the use of an application, one determines a level of respect of said contract by said triggered use from a comparison of this triggered use with the use defined by said contract according to at least one criteria, and one provides said first (E1) and second (E2) communication equipments with notifications to be displayed and representative of said determined level of respect.

2. Method according to claim 1, wherein each criteria is chosen from a group comprising at least a type of said application used, a location where said application is used, a time of use of said application, a duration of the use of said application, and a frequency of use of said application.

3. Method according to claim 2, wherein the type of said application is determined from its identifier and/or from accessible information relative to it and/or to contents it provides access to.

4. Method according to one of claims 1 to 3, wherein a first level of respect corresponds to a use fully respecting said contract, a second level of respect corresponds to a use that is near to do not respect said contract, and a third level of respect corresponds to a use that does not respect said contract.

5. Method according to claim 4, wherein said notification is intended for triggering a display of an icon either in a green colour when it represents said first level of respect, or in an orange colour when it represents said second level of respect, or else in a red colour when it represents said third level of respect.

6. Method according to one of claims 1 to 5, wherein a message, explaining reason(s) of a notification representative of a level of respect corresponding to a use that either is near to do not respect said contract or does not respect said contract, is displayed on a screen of said second communication equipment (E2) on request of said second user and/or on a screen of said first communication equipment (E1) on request of said first user.

7. Method according to one of claims 1 to 6, wherein said application use is forbidden in the case where it corresponds to a level of respect corresponding to a use that does not respect said contract.

8. Method according to claim 7, wherein one authorizes said forbidden use in case of reception of a use authorization emanating from said second communication equipment (E2).

9. Device (D) for controlling the use of applications by a first communication equipment (E1) belonging to a first user having accepted a contract of use proposed by a second user having a second communication equipment (E2), said device (D) comprising i) a first control means (CM1) intended for running into said first communication equipment (E1) and arranged, each time said first communication equipment (E1) triggers the use of an application, for determining a level of respect of said contract by said triggered use from a comparison of this triggered use with the use defined by said contract according to at least one criteria, and for delivering notifications to be displayed and representative of said determined level of respect for said first (E1) and second (E2) communication equipments, and ii) a second control means (CM2) intended for running into said second communication equipment (E2) and arranged, when the latter (E2) has received said notification, for triggering its display on a screen of said second communication equipment (E2).

10. Device according to claim 9, wherein said second control means (CM2) is arranged for determining reason(s) of a notification, representative of a level of respect corresponding to a use that either is near to do not respect the contract or does not respect the contract, on request of said second user, and then for triggering the display of a message explaining said determined reason(s) on a screen of said second communication equipment (E2), and/or said first control means (CM1) is arranged for determining reason(s) of a notification, representative of a level of respect corresponding to a use that either is near to do not respect the contract or does not respect the contract, on request of said first user, and then for triggering the display of a message explaining said determined reason(s) on a screen of said first communication equipment (E1).

11. Device according to one of claims 9 and 10, wherein each criteria is chosen from a group comprising at least a type of said application used, a location where said application is used, a time of use of said application, a duration of the use of said application, and a frequency of use of said application.

12. Device according to claim 11, wherein said first control means (CM1) is arranged for determining the type of said application from its identifier and/or from accessible information relative to it and/or to contents it provides access to.

13. Device according to one of claims 9 to 12, wherein said first control means (CM1) is arranged for forbidden said application use when it corresponds to a level of respect corresponding to a use that does not respect said contract.

14. Device according to claim 13, wherein said first control means (CM1) is arranged for authorizing said forbidden use when said first communication equipment (E1) has received a use authorization from said second communication equipment (E2).

15. Communication equipment (E1; E2), wherein it comprises either a first control means (CM1) or a second control means (CM2) of a device (D) according to one of claims 9 to 14.
